# EUROPEAN PATENT SPECIFICATION

(11) **EP 1 747 966 B1**
(45) Date of publication and mention of the grant of the patent: **16.04.2008**
(21) Application number: 06015071.1
(22) Date of filing: 19.07.2006
(51) Int. Cl.: B62D 1/18

(54) **Steering device**
Lenkvorrichtung
Dispositif de direction

(30) Priority: 29.07.2005 JP 2005220453; 28.11.2005 JP 2005341584
(43) Date of publication of application: 31.01.2007
(73) Proprietor: FUJI KIKO Co., Ltd., Kosai-shi, Shizuoka 431-0431 (JP)
(72) Inventor: Fujita, Tomokazu Fuji Kiko Co., Ltd., Shizuoka 431-0431 (JP)
(74) Representative: Grünecker, Kinkeldey, Stockmair & Schwanhäusser Anwaltssozietät

(56) References cited:
- EP-A1- 1 328 433
- EP-A2- 1 180 466

## Description

### BACKGROUND OF THE INVENTION

The present invention relates to a steering device capable of carrying out at least one of a tilt adjustment and a telescoping adjustment. EP 1 328 433 discloses a steering device according to the preamble of claim 1.

Japanese Patent Application Publication No. 2002-59851 discloses a steering device equipped with cam surfaces for conducting a tilt lock. The tilt lock is achieved by pressing side plates of both brackets against each other when rotating a tilt lever in the fastening direction, in order to enhance an operability without expanding an operating range of tilt lever. Moreover in this technique, the cam surface includes a plurality of inclinations corresponding to rotational stroke positions of the tilt lever.

### SUMMARY OF THE INVENTION

However in the structure of above-disclosed steering device, there is a possibility that a knee of driver hits the tilt lever, for example at the time of collision of the vehicle. Although a rigidity of tilt lever is reduced as a countermeasure in order to lessen a degree of injury to the driver's knee, there is a problem that the operability is impaired due to the reduction of rigidity.

It is therefore an object of the present invention to provide a steering device devised to solve or lessen the above-mentioned problem, and devised to secure a safety against an excessive input at the time of vehicle collision.

According to one aspect of the present invention, there is provided a steering device comprising: a vehicle-body side bracket being adapted to be fixed on a vehicle body, and including a pair of arm portions on left and right sides of the vehicle body; a column-side bracket combined with a steering column, and disposed between the pair of arm portions; a supporting member inserted through two elongate holes formed one of in two points of the column-side bracket and in the pair of arm portions, and inserted through two holes formed another of in the two points of the column-side bracket and in the pair of arm portions; a fixed cam member disposed between an end portion of the supporting member and the arm portion adjacent to the end portion of the supporting member, the supporting member being inserted through the fixed cam member, the fixed cam member being substantially prevented from rotating; a movable cam member rotatably disposed to face the fixed cam member, the supporting member being inserted through the movable cam member; and an operating lever connected with the movable cam member, the movable cam member being adapted to lock the steering column by engaging with the fixed cam member in response to a rotational operation of the operating lever, at least one of the fixed cam member and the movable cam member including a restriction portion adapted to restrict a rotation of the movable cam member when the steering column is locked, the restriction portio is formed with a rupture inducing portion formed to cause the restriction portion to rupture when the operating lever receives an excessive rotational force.

The other objects and features of this invention will become understood from the following description with reference to the accompanying drawings.

### BRIEF DESCRIPTION OF THE DRAWINGS

FIG. 1 is a schematic view showing a structure of steering device as viewed in its axial direction, in a first embodiment according to the present invention.

FIG. 2 is a schematic view showing the structure of steering device as viewed in a direction perpendicular to the axial direction, in the first embodiment.

FIG. 3 is an oblique perspective view showing a relation between a vehicle-body side bracket and a column-side bracket, in the first embodiment.

FIG. 4A is a front view of an operating lever as viewed in the axial direction, in the first embodiment. FIG. 4B is a right side view of the operating lever, in the first embodiment.

FIG. 5A is a front view of a locking plate in the first embodiment. FIG. 5B is a right side view of the locking plate, in the first embodiment.

FIG. 6A is a front view of a fixed cam including a cam surface, in the first embodiment. FIG. 6B is a front view of a movable cam including a cam surface, in the first embodiment.

FIG. 7 is a cross sectional view as viewed by cutting away the fixed cam of FIG. 6A in a circumferential direction.

FIG. 8 is a partially enlarged view of FIG. 7.

FIG. 9 is a schematic view showing a structure of steering device as viewed in its axial direction, in a second embodiment according to the present invention.

FIG. 10A is a front view of an operating lever as viewed in the axial direction, in the second embodiment. FIG. 10B is a right side view of the operating lever, in the second embodiment.

### DETAILED DESCRIPTION OF THE INVENTION

Reference will hereinafter be made to the drawings in order to facilitate a better understanding of the present invention.

### [First Embodiment]

At first, a first embodiment of steering device according to the present invention will now be explained.

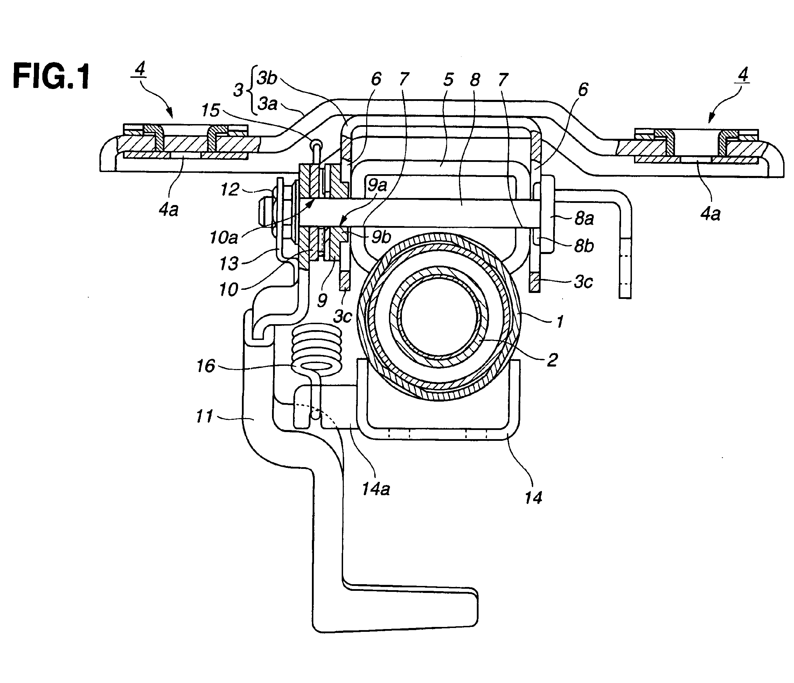

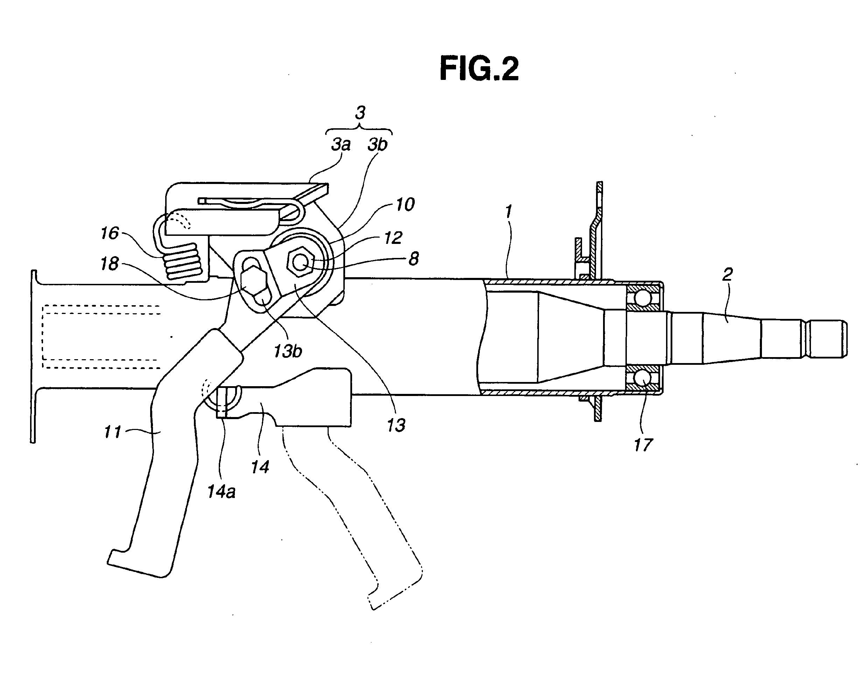

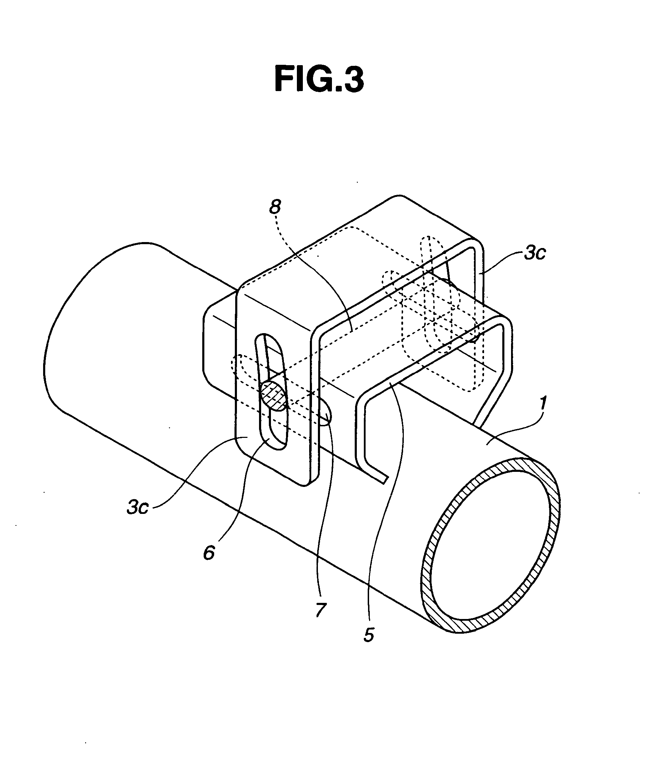

FIG. 1 is a schematic view showing the steering device, as viewed in its axial direction. FIG. 2 is a schematic view showing the steering device, as viewed in a direction perpendicular to the axial direction. FIG. 3 is an oblique perspective view showing the relation between a vehicle-body side bracket and a column-side bracket.

As shown in FIGS. 1 and 2, a steering shaft 2 is rotatably supported via a bearing 17 or the like, inside a steering column 1. Steering column 1 is formed in the shape of a tube. At an upper end of steering shaft 2 shown in the right end portion of FIG. 2, a steering wheel is provided (not shown). At a center portion of steering shaft 2, an elongating-shortening section (telescopic section) adapted to elongate and shorten the steering shaft 2 is provided (not shown). In other words, the steering shaft 2 includes a means for elongating and shortening the steering shaft 2 at the center portion of steering shaft 2. A lower end (also, a left end in FIG. 2) of steering shaft 2 is connected with a steering gear box through a free joint (not shown). Moreover, an elongating-shortening section (not shown) is provided also in the steering column 1. Furthermore, a tilt telescopic mechanism including a tilt mechanism for adjusting a height position of the steering wheel and a telescopic mechanism for adjusting a fore-and-after position of the steering wheel is provided in the steering device of this embodiment.

A structure of the tilt telescopic mechanism will now be explained. An upper portion of steering column 1 is supported so as to be capable of moving in an up-and-down (vertical) direction and a fore-and-after (front-rear) direction of the vehicle body. As shown in FIG. 1, the vehicle-body side bracket 3 is fixedly attached or mounted on the vehicle body, above the steering column 1. The vehicle-body side bracket 3 includes a mounting portion 3a extending longly in a left-and-right direction of vehicle body, and a supporting portion 3b formed substantially in the shape of an inverted-U. The supporting portion 3b is combined (fixedly coupled) with the mounting portion 3a. At the both sides of mounting portion 3a, the mounting plates 4 serving to mount the vehicle-body side bracket 3 on the vehicle body are provided. Each mounting plate 4 is formed with a mounting hole 4a. The supporting portion 3b includes a pair of arm portions 3c at a left side and a right side of supporting portion 3b, relative to the left-right direction of vehicle body. On the other hand, the steering column 1 is (fixedly) connected with both end portions of column-side bracket 5, as shown in the oblique perspective view of FIG. 3. The column-side bracket 5 is formed substantially in the shape of C or U in cross section. The column-side bracket 5 is fitted into the supporting portion 3b between the pair of arm portions 3c of vehicle-body side bracket 3. Thereby, the column-side bracket 5 is adapted to be capable of moving in substantially vertical direction and in the axial direction of steering column 1.

Namely, the detailed structure is as follows. Each of both arm portions 3c has an elongate hole (oblong hole) 6 formed along the up-down (substantially vertical) direction, as shown in FIG. 3. On the other hand, each of both sides of column-side bracket 5 has an elongate hole 7 formed along the axial direction of steering column 1 (substantially front-rear direction of vehicle body), as shown in FIG. 3. In other words, each of both arm portions 3c is formed with elongate hole 6, and each of left and right sides of column-side bracket 5 is formed with elongate hole 7. A fastening bolt 8 is inserted into the elongate holes 6 and the elongate holes 7, as supporting means (as a supporting member). As shown in FIG. 1, the fastening bolt 8 includes a head portion 8a in which a guide portion 8b is formed. The guide portion 8b serves to slide inside the elongate holes 6 and to prevent the fastening bolt 8 from rotating. A width dimension of guide portion 8b is designed to be slightly shorter than a width dimension of elongate hole 6.

At a screw portion of fastening bolt 8 on the side opposite to head portion 8a, a nut 12 has been screwed. A locking section (or mechanism) for locking the steering column 1 is provided between the nut 12 and one arm portion 3c. Namely, the locking section (mechanism) is constructed between an end portion of fastening bolt 8 and the arm portion 3c adjacent to this end portion of fastening bolt 8. The locking section prevents the steering column 1 from moving in the up-down direction and the front-rear direction of vehicle body, by expanding a distance between the nut 12 and the arm portion 3c and thereby enlarging a friction coefficient between the vehicle-body side bracket 3 and the column-side bracket 5.

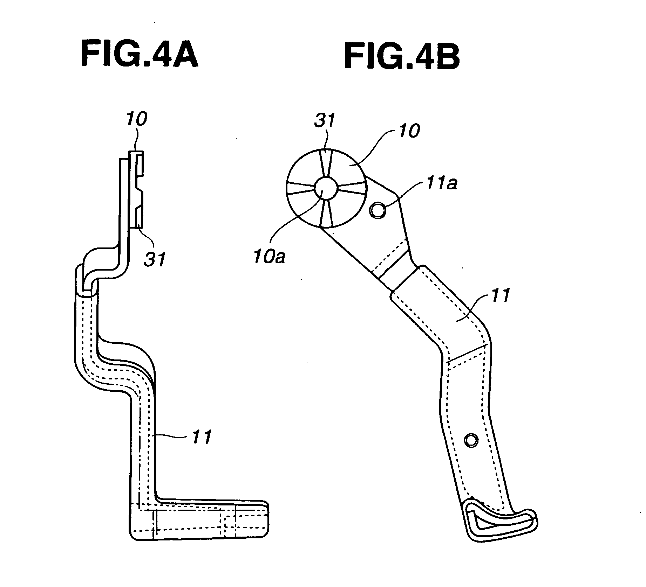

A structure of the locking section is now explained. A fixed cam member 9 and a movable cam member 10 are provided between the nut 12 and one arm portion 3c, under the condition where the fastening bolt 8 is inserted through the fixed cam member 9 and the movable cam member 10. At the position of axis center of fixed cam member 9, an insertion hole 9a is formed. At the end surface of fixed cam member 9, a guide portion 9b is formed to slide up and down inside the elongate hole 6 and serve to prevent the fixed cam member 9 from rotating. On the other hand, the movable cam member 10 is attached to an operating lever 11. The movable cam member 10 has a projecting portion (not shown) formed in the shape of a rectangle, adjacent to axis center of movable cam member 10. This projecting portion is pressed into a rectangle-shaped fitting hole (not shown) formed in a base end portion of operating lever 11. Accordingly as shown in FIGS. 4A and 4B, the movable cam member 10 is adapted to rotate integrally with (rotate as a unit with) the operating lever 11 about the fastening bolt 8. Moreover, the fastening bolt 8 is inserted through an insertion hole 10a formed through the rectangle-shaped projecting portion of movable cam member 10. In other words, the movable cam member 10 connected with the operating lever 11 is rotatably disposed so as to face the fixed cam member 9.

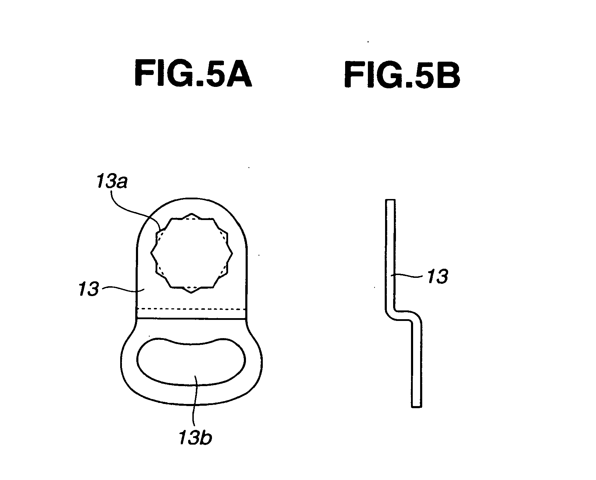

In order to prevent a loosening of the nut 12 screwed on fastening bolt 8, a locking plate 13 is provided. As shown in FIGS. 5A and 5B, the locking plate 13 is formed in the shape represented by bending both sides of a metal plate respectively in two opposing directions. The locking plate 13 is formed with a locking hole 13a in one side of locking plate 13, and with an elongate hole 13b in another side of locking plate 13. In the locking hole 13a, corner portions into which corner edges of nut 12 shaped like an equilateral hexagon in cross section can be fit are formed at twelve points along a circumferential direction of locking hole 13a. The elongate hole 13b is formed along an arc defined by regarding the locking hole 13a as a center of the arc. A bolt 18 is inserted through this elongate hole 13b, and is screwed into a tap hole 11a of operating lever 11. Thereby, the operating lever 11 rotates integrally with the nut 12, and moreover the operating lever 11 rotates integrally with the movable cam member 10. Namely, three of the operating lever 11, the movable cam member 10, and the nut 12 rotate integrally with one another (rotate as a unit).

Additionally, when the nut 12 is screwed and tightened with a predetermined torque, the position of hexagonal corner portions of the nut 12's head portion is varied (dispersed). However, a relative angle of operating lever 11 to nut 12 can be circumferentially varied, by varying a position of bolt 18 in a longitudinal (elongated) direction of elongate hole 13b. Hence, the operating lever 11 can be arranged at a certain position.

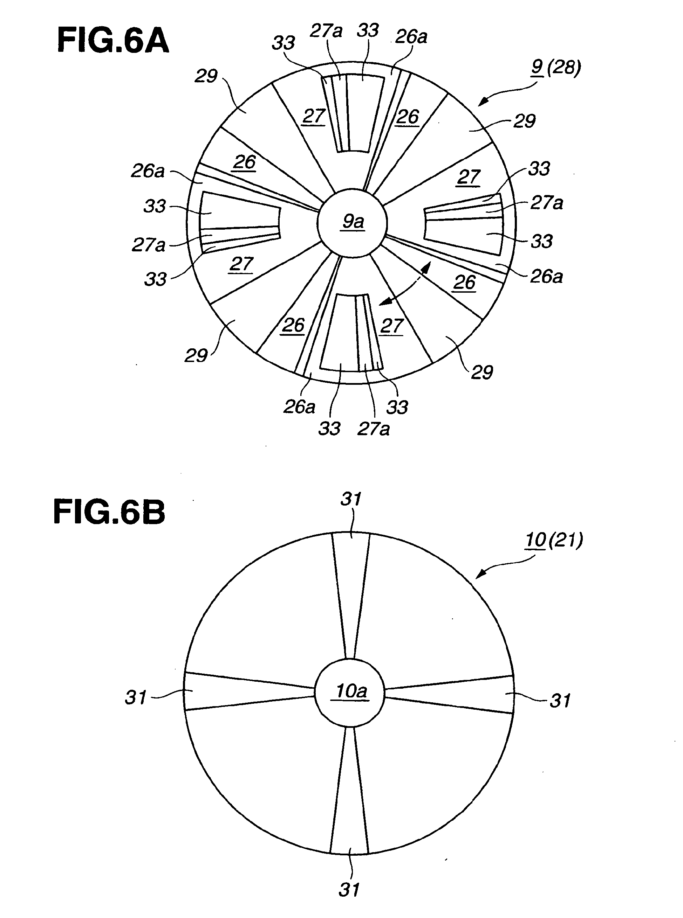

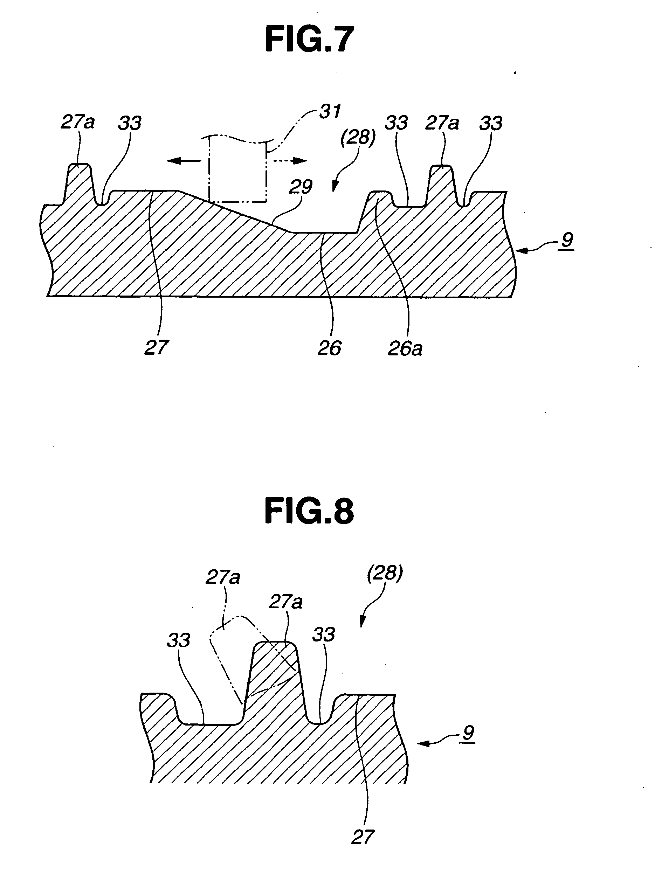

As shown in FIGS. 6B and 7, four table-shaped protrusions 31 are formed in a cam surface 21 of movable cam member 10, successively in a circumferential direction of movable cam member 10. On the other hand as shown in FIGS. 6A and 7, a first flat portion 26, a second flat portion 27, and an inclination portion 29 are formed in a fixed cam member 9's cam surface 28 opposed to the cam surface 21 of movable cam member 10. The first flat portion 26 is a lower (thin) area relative to the axial direction of the fixed cam member 9, and the protrusion 31 is located (or abuts) on the first flat portion 26 under an unlocked state. The second flat portion 27 is a higher (thick) area on which the protrusion 31 abuts (is located) under a locked state. The inclination portion 29 links the first flat portion 26 and the second flat portion 27. Four first flat portions 26, four second flat portions 27, and four inclination portions 29 are provided around the fastening bolt 8 located at the center of fixed cam member 9. In other words, the movable cam member 10 engages with the fixed cam member 9 to lock the steering column 1 when the protrusion 31 has slid onto the higher area in response to a rotational operation of operating lever 11. Namely, since the protrusion 31 is adapted to slide in contact with the cam surface 28, a contact area(s) of cam surface 28 with cam surface 21 is varied from the first flat portion 26 to the second flat portion 27 through the inclination portion 29. Moreover, the fixed cam member 9 includes a first restriction portion 26a formed adjacent to the first flat portion 26 to protrude in the axial direction of fixed cam member 9. This first restriction portion 26a serves to restrict (or regulate) the movement of protrusion 31 of movable cam member 10 when releasing the locking (under unlocked state), and thereby serves to position the protrusion 31. Moreover, the fixed cam member 9 (or the cam surface 28) includes a second restriction portion 27a formed adjacent to the second flat portion 27 to protrude in the axial direction of fixed cam member 9. This second restriction portion 27a serves to restrict the movement of protrusion 31 when conducting the locking (under locked state), and thereby serves to position the protrusion 31. Namely, the second restriction portion 27a restricts or stops the rotation of movable cam member 10 when the steering column 1 is locked.

As shown in FIG. 8, recess portions 33 are formed at both sides of the second restriction portion 27a in the circumferential direction of fixed cam member 9, as a rupture inducing section. In the case where a knee of the driver hits the operating lever 11, and thereby the protrusion 31 of movable cam member 10 is forced to move further in the locking direction by receiving an excessive force; this second restriction portion 27a ruptures and breaks. Thereby, the operating lever 11 is not prevented from rotating further in the direction for locking the steering wheel. Hence, an injury of knee can be lightened. In other words, the second restriction portion 27a is formed with the rupture inducing section for causing the second restriction portion 27a to rupture when the operating lever 11 receives an excessive rotational force (i.e., force exceeding a predetermined tolerance).

When unlocking the steering column 1 equipped with the tilt telescopic mechanism, the steering wheel and the like drop (move down) along the elongate hole 6 due to its own weight. Hence, a supporting member 14 shaped like U in cross section is provided on a lower surface of steering column 1 so as to support the steering wheel and the like. A spring hooking (hanging) portion 14a is formed in this supporting member 14, and a spring hooking hole 15 is formed in the vehicle-body side bracket 3. A spring 16 for hoisting the supporting member 14 is provided between the spring hooking portion 14a and the spring hooking hole 15.

Next, the procedures and benefits according to the above first embodiment of steering device will now be explained. In the case where the height (position) of steering wheel needs to be varied under the condition where the steering column 1 having the tilt telescopic mechanism has been locked, the following procedure is used. At first, the operating lever 11 is rotated in a counterclockwise direction of FIG. 2. Thereby, the movable cam member 10 and the nut 12 rotate in the counterclockwise direction, since the operating lever 11 is adapted to rotate integrally with the movable cam member 10 and the nut 12. Along a broken arrow of FIG. 7, the protrusion 31 moves down from the second flat portion 27 of fixed cam member 9 through the inclination portion 29 to the first flat portion 26. Thereby, the tension (pressure) between the nut 12 and the arm portion 3c is released or weakened. Accordingly, the steering column 1 becomes capable of moving up and down.

Then, after varying the height of steering wheel, namely under the condition where the position of fastening bolt 8 has moved inside (along the shape of) the elongate hole 6 of FIG. 3; the operating lever 11 is rotated and fastened in a clockwise direction. During this time, the spring 16 supports the weight of steering wheel. When fastening the operating lever 11, the movable cam member 10 and the nut 12 rotate integrally in the clockwise direction. Along a solid arrow of FIG. 7, the protrusion 31 moves upwardly from the first flat portion 26 of fixed cam member 9 through the inclination portion 29 to the second flat portion 27. Thereby, the tension (pressure) between the nut 12 and the arm portion 3c is caused or strengthened. Namely, the column-side bracket 5, the pair of arm portions 3c, the fixed cam member 9, and the movable cam member 10 are pressed more tightly from both end portions of fastening bolt 8 because of the width expansion (width expansion of both cam members in its axial direction) caused between the nut 12 and the adjacent arm portion 3c. Accordingly, the steering column 1 is locked, and becomes incapable of moving up and down.

In the case where the position of steering wheel needs to be varied in the front-rear direction of vehicle body, the lock is released in the similar manner as the above procedure for varying the position of steering wheel in the up-down direction. Next, the position of steering wheel is changed in the front-rear direction of vehicle body, by moving the position of fastening bolt 8 along (inside) the elongate hole 7 of FIG. 3 without moving fastening bolt 8 along the elongate hole 6. Under this condition, the steering wheel is locked again. Since the elongating-shortening sections (not shown) are provided in the steering column 1 and the steering shaft 2, the front-rear directional movement of the steering column 1 and the steering shaft 2 is allowed.

In the case where the vehicle collides, and thereby the knee of driver kicks the operating lever 11 so as to rotate the operating lever 11 further in the locking direction (clockwise direction of FIG. 2); the second restriction portion 27a easily ruptures since the strength of second restriction portion 27a is relatively reduced because of the existence of recess portions 33. Thereby, the operating lever 11 is not prevented from rotating further in the locking direction, and thereby the injury to driver's knee can be alleviated. Moreover, the operating lever 11 can be designed to have high strength in a conventional manner. Namely, an operating lever of high strength can be employed in the steering device of this embodiment. Hence, the operability of operating lever is not impaired.

In this first embodiment, the rupture inducing section (portion) can be easily provided, since the recess portions 33 are simply formed as the rupture inducing section. Moreover, the strength of the restriction portion can be easily designed (i.e., a strength control for the restriction portion is easy), and the other component(s) is not necessary to be added. Hence, the cost efficiency can be improved.

In the case where the fastening force for locking the steering column 1 (i.e., fastening force under the condition where the steering column 1 is locked) needs to be adjusted, or in the case where the unlocked condition of steering column 1 needs to be adjusted; the locking plate 13 is rotated together with the nut 12 after loosening the bolt 18 of FIG. 2. Thereby, a rotation angle of nut 12 relative to the operating lever 11 is changed. Afterwards, by fastening the bolt 18, such adjustments are performed.

### [Second Embodiment]

Next, a second embodiment of steering device according to the present invention will now be explained.

Since the second embodiment is constructed by partially modifying the first embodiment, the explanations of the same parts as the first embodiment will be omitted. Hence, only the parts different from the first embodiment will now be explained. In this second embodiment, a holding portion (section or means) is provided to hold the second restriction portion so as not to cause the second restriction portion to drop onto a floor of vehicle-interior (room) when the second restriction portion ruptures as explained in the first embodiment.

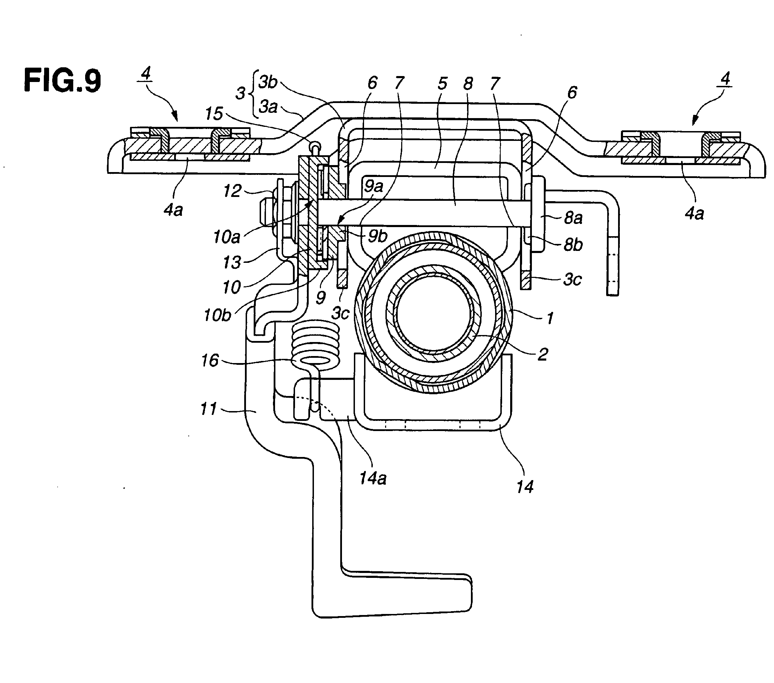

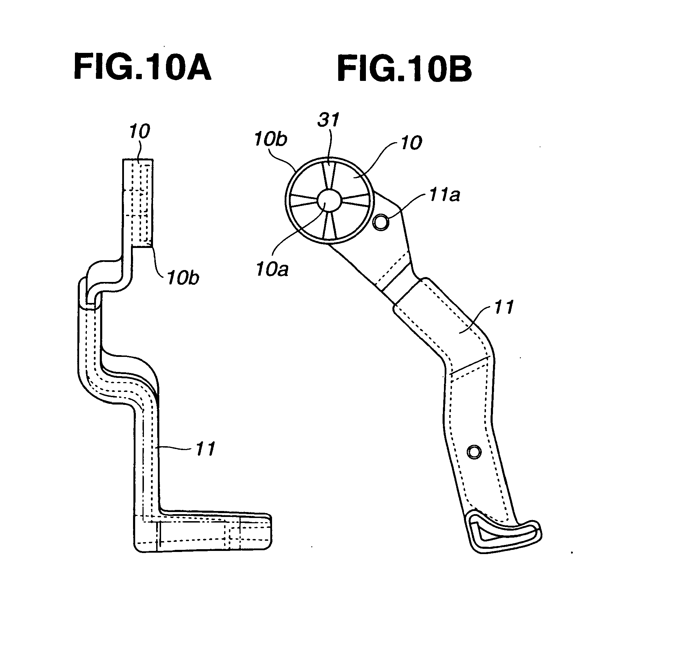

FIG. 9 is a schematic view showing a structure of the second embodiment. FIGS. 10A and 10B are schematic component views showing the operating lever 11. As shown in FIGS. 9, 10A, and 10B, the movable cam member 10 provided in the operating lever 11 includes a cylindrical (or tube) portion 10b as the holding portion. This cylindrical portion 10b is provided to hold the second restriction portion 27a between the fixed cam member 9 and the movable cam member 10, when the second restriction portion 27a ruptures or breaks. The cylindrical portion 10b is formed to enclose or cover a space sandwiched between the fixed cam member 9 and the movable cam member 10 (of the first embodiment). The cylindrical portion 10b is formed integrally with the movable cam member 10, and protrudes so as to surround the fixed cam member 9, in this second embodiment.

Next, the benefits of structure according to the second embodiment of steering device will now be explained. As shown in FIG. 9, since the space sandwiched between the fixed cam member 9 and the movable cam member 10 is surrounded or enclosed with the cylindrical portion 10b; the broken second restriction portion 27a is held between the fixed cam member 9 and the movable cam member 10 because of the existence of cylindrical portion 10b, in the case where the second restriction portion 27a ruptures. Therefore, the second restriction portion 27a does not fall into the vehicle interior.

In the above first and second embodiments, the tilt telescopic mechanism has been constructed by combining both of the tilt mechanism and the telescopic mechanism with the single locking means (section). However, the steering device according to the present invention may include only a mechanism constructed by combining the tilt mechanism with the locking means. Moreover, the steering device according to the present invention may include only a mechanism constructed by combining the telescopic mechanism with the locking means.

In the above first and second embodiments, the movable cam member includes the protrusion (portion) for contacting the fixed cam member, and the fixed cam member includes the second restriction portion. However the steering device according to the present invention can be constructed so that the movable cam member includes the second restriction portion and the fixed cam member includes the protrusion (portion). Furthermore, the structure of rupture inducing portion is not limited to the recess portion(s) formed in the axial direction of movable cam member as shown in FIGS. 7 and 8. In the steering device according to the present invention, for example, a cut portion toward the circumferential direction of movable cam member (i.e., notch portion cut in the left-right direction of FIG. 7) may be formed in a base portion of the second restriction portion of FIG. 7, instead of the recess portion.

Additionally in the above second embodiment, the cylindrical portion as the holding portion is formed integrally with the movable cam member. However in the steering device according to the present invention, the cylindrical portion may be formed integrally with the fixed cam member. Alternatively, the cylindrical portion may be manufactured as a separate member, and then be coupled with one of the movable cam member and the fixed cam member.

## Claims

1. A steering device comprising:
a vehicle-body side bracket (3) being adapted to be fixed on a vehicle body, and including a pair of arm portions (3c) on left and right sides of the vehicle body;
a column-side bracket (5) combined with a steering column (1), and disposed between the pair of arm portions (3c);
a supporting member (8) inserted through two elongate holes formed one of in two points of the column-side bracket (5) and in the pair of arm portions (3c), and inserted through two holes formed another of in the two points of the column-side bracket (5) and in the pair of arm portions (3c);
a fixed cam member (9) disposed between an end portion of the supporting member (8) and the arm portion (3c) adjacent to the end portion of the supporting member (8), the supporting member (8) being inserted through the fixed cam member (9), the fixed cam member (9) being substantially prevented from rotating;
a movable cam member (10) rotatably disposed to face the fixed cam member (9), the supporting member (8) being inserted through the movable cam member (10); and
an operating lever (11) connected with the movable cam member (10), the movable cam member (10) being adapted to lock the steering column (1) by engaging with the fixed cam member (9) in response to a rotational operation of the operating lever (11),
at least one of the fixed cam member (9) and the movable cam member (10) including a restriction portion (27a) adapted to restrict a rotation of the movable cam member (10) when the steering column (1) is locked, **characterized in that** the restriction portion (27a) is formed with a rupture inducing portion (33) formed to cause the restriction portion (27a) to rupture when the operating lever (11) receives an excessive rotational force.

2. The steering device as claimed in Claim 1, wherein the rupture inducing portion (33) is defined by recess portions (33) formed at both sides of the restriction portion (27a) in a circumferential direction of the movable cam member (10).

3. The steering device as claimed in one of Claims 1 and 2, wherein the steering device further comprises a holding portion adapted to hold the ruptured restriction portion (27a) between the fixed cam member (9) and the movable cam member (10) when the restriction portion (27a) ruptures.

4. The steering device as claimed in Claim 3, wherein the holding portion is defined by a tube portion (10b) provided integrally in one of the fixed cam member (9) and the movable cam member (10); and the tube portion (10b) covers a space sandwiched between the fixed cam member (9) and the movable cam member (10).

5. The steering device as claimed in one of Claims 1-4, wherein
the column-side bracket (5) is fitted between the pair of arm portions (3c);
the column-side bracket (5), the pair of arm portions (3c), the fixed cam member (9), and the movable cam member (10) are pressed from both end portions of the supporting member (8);
the movable cam member (10) includes a first surface (21), and the fixed cam member (9) includes a second surface (28) adapted to slide in contact with the first surface (21) at the time of the rotational operation of operating lever (11);
each of the first surface (21) of movable cam member (10) and the second surface (28) of fixed cam member (9) includes a higher portion (27, 31) and a lower portion (26) relative to an axial direction of movable cam member (10); and
the steering column (1) is adapted to be locked, by rotating the movable cam member (10) about the supporting member (8) in response to the rotational operation of operating lever (11) and thereby varying a contact area of the second surface (28) with the first surface (21) from the lower portion (26) to the higher portion (27, 31).

6. The steering device as claimed in one of Claims 1-5, wherein
the supporting member (8) is inserted through four elongate holes (6, 7) respectively formed in two points of the column-side bracket (5) and in the pair of arm portions (3c); and
the steering column (1) is adapted to move along the shapes of four elongate holes (6, 7) in two directions of a substantially up-down direction of vehicle body and a substantially front-rear direction of vehicle body while the steering column (1) is unlocked.

7. The steering device as claimed in Claim 5, wherein
the restriction portion (27a) is defined by a protrusion formed in at least one of the second surface (28) of fixed cam member (9) and the first surface (21) of movable cam member (10) to stop the rotation of movable cam member (10); and
the rupture inducing portion (33) is formed to cause the protrusion (27a) to rupture when the operating lever (11) receives force exceeding a predetermined tolerance.

8. The steering device as claimed in Claim 7, wherein the rupture inducing portion (33) is defined by a cut portion formed in the protrusion (27a) to allow the operating lever (11) to rotate when the operating lever (11) receives force exceeding the predetermined tolerance under the locked state of steering column (1).

## Patentansprüche

1. Lenkvorrichtung, aufweisend:
eine Fahrzeugkarosserie- Seitenhalterung (3), die vorgesehen ist, an einer Fahrzeugkarosserie befestigt zu werden, und ein Paar von Armabschnitten (3c) auf linken und rechten Seiten der Fahrzeugkarosserie;
eine säulenseitige Halterung (5), kombiniert mit einer Lenksäule (1), und angeordnet zwischen dem Paar von Armabschnitten (3c);
ein Tragteil (8), eingesetzt durch zwei Langlöcher, eines gebildet in zwei Punkten der säulenseitigen Halterung (5) und in dem Paar der Armabschnitte (3c) und eingesetzt durch zwei Bohrungen, gebildet in weiteren zwei Punkten der säulenseitigen Halterung (5) und in dem Paar der Armabschnitte (3c);
ein feststehendes Nockenteil (9), angeordnet zwischen einem Endabschnitt des Tragteils (8) und dem Armabschnitt (3c), benachbart zu dem Endabschnitt des Tragteils (8), wobei das Tragteil (8) durch das feststehende Nockenteil (9) eingesetzt ist, wobei das feststehende Nockenteil (9) im Wesentlichen am Drehen gehindert ist;
ein bewegbares Nockenteil (10), drehbar angeordnet, um dem feststehenden Nockenteil (9) gegenüberzustehen, wobei das Tragteil (8) durch das bewegbare Nockenteil (10) eingesetzt ist; und
einen Betätigungshebel (11), verbunden mit dem bewegbaren Nockenteil (10), wobei das bewegbare Nockenteil (10) vorgesehen ist, die Lenksäule (1) durch das Eingreifen mit dem feststehenden Nockenteil (9) in Abhängigkeit von einer Drehbetätigung des Betätigungshebels (11) zu verriegeln,
zumindest eines von dem feststehenden Nockenteil (9) und dem bewegbaren Nockenteil (10) einen Begrenzungsabschnitt (27a) enthält, vorgesehen, um eine Drehung des bewegbaren Nockenteils (10) zu begrenzen, wenn die Lenksäule (1) verriegelt ist, **dadurch gekennzeichnet, dass** der Begrenzungsabschnitt (27a) mit einem bruchverursachenden Abschnitt (33) gebildet ist, gebildet, um den Begrenzungsabschnitt (27a) zu veranlassen, zu brechen, wenn der Betätigungshebel (11) eine übermäßige Drehkraft empfängt.

2. Lenkvorrichtung nach Anspruch 1, wobei der bruchverursachenden Abschnitt (33) durch Aussparungsabschnitte (33) gebildet ist, gebildet auf beiden Seiten des Begrenzungsabschnittes (27a) in einer Umfangsrichtung des bewegbaren Nockenteils (10).

3. Lenkvorrichtung nach einem der Ansprüche 1 und 2, wobei die Lenkvorrichtung außerdem aufweist eine Halteabschnitt, vorgesehen, um den gebrochenen Begrenzungsabschnitt (27a) zwischen dem feststehenden Nockenteil (9) und dem bewegbaren Nockenteil (10) zu halten, wenn der Begrenzungsabschnitt (27a) bricht.

4. Lenkvorrichtung nach Anspruch 3, wobei der Halteabschnitt durch einen Rohrabschnitt (10b) gebildet ist, einstückig vorgesehen in einem von dem feststehenden Nockenteil (9) oder dem bewegbaren Nockenteil (10); und der Rohrabschnitt (10b) einen Raum, zwischenliegend zwischen dem feststehenden Nockenteil (9) und dem bewegbaren Nockenteil (10), abdeckt.

5. Lenkvorrichtung nach einem der Ansprüche 1 bis 4, wobei
die Säulenseitige Halterung (5) zwischen das Paar der Armabschnitte (3c) eingesetzt ist;
die säulenseitige Halterung (5), das Paar von Armabschnitten (3c), das feststehende Nockenteil (9) und bewegbaren Nockenteil (10) von beiden Endabschnitten des Trogteils gepresst werden;
das bewegbare Nockenteil (10) eine erste Oberfläche (21) enthält und das feststehende Nockenteil (9) eine zweite Oberfläche (28) enthält, vorgesehen, um in Kontakt mit der ersten Oberfläche (21) zu der Zeit der Drehbetätigung des Betätigungshebels (11) zu gleiten;
wobei jede der ersten Oberfläche (21) des bewegbaren Nockenteils (10) und der zweiten Oberfläche (28) des feststehenden Nockenteils (9) einen höheren Abschnitt (27, 31) und einen unteren Abschnitt (26) relativ zu einer axialen Richtung des bewegbaren Nockenteils (10) enthält;
und
die Lenksäule (1) vorgesehen ist, durch Drehen des bewegbaren Nockenteils (10) um das Trogteil (8) in Abhängigkeit von der Drehbetätigung des Betätigungshebels (11) verriegelt zu werden und **dadurch** eine Kontaktfläche der zweiten Oberfläche (28) mit der ersten Oberfläche (21) von dem unteren Abschnitt (26) zu dem höheren Abschnitt (27, 31) sich verändert.

6. Lenkvorrichtung nach einem der Ansprüche 1 - 5,
wobei
das Trogteil (8) durch vier Langlöcher (6, 7) eingesetzt ist, jeweils in zwei Punkten der säulenseitigen Halterung (5) und dem Paar von Armabschnitten (3c gebildet; und
die Lenksäule (1) vorgesehen ist, sich entlang der Formen der vier Langlöcher (6, 7) in zwei Richtungen einer im Wesentlichen Auf- / Ab- Richtung der Fahrzeugkarosserie und einer im Wesentlichen Vorwärts- / Rückwärts- Richtung der Fahrzeugkarosserie zu bewegen, während die Lenksäule (1) entriegelt ist.

7. Lenkvorrichtung nach Anspruch 5, wobei
der Begrenzungsabschnitt (27a), gebildet wird durch einen Vorsprung, gebildet in zumindest einer der zweiten Oberfläche (28) des feststehenden Nockenteils (9) oder der ersten Oberfläche (21) des bewegbaren Nockenteils (10), um die Drehung des bewegbaren Nockenteils (10) zu stoppen; und
der bruchverursachenden Abschnitt (33) gebildet ist, um den Vorsprung (27a) zu veranlassen, zu brechen, wenn der Betätigungshebel (11) eine Kraft empfängt, die eine vorbestimmte Toleranz überschreitet.

8. Lenkvorrichtung nach Anspruch 7, wobei der bruchverursachenden Abschnitt (33) durch einen Ausschnittsabschnitt, gebildet in dem Vorsprung (27a), gebildet ist, um dem Betätigungshebel (11) zu gestatten, sich zu drehen, wenn der Betätigungshebel (11) eine Kraft aufnimmt, die die vorbestimmte Toleranz während des verriegelten Zustandes der Lenksäule (1) überschreitet.

## Revendications

1. Dispositif de direction comprenant:
un support latéral de caisse de véhicule (3) apte à être fixé à une caisse de véhicule, et comprenant deux portions de bras (3c) aux côtés gauche et droit de la caisse de véhicule;
un support côté colonne (5) combiné avec une colonne de direction (1), et disposé entre les deux portions de bras (3c);
un élément de support (8) inséré à travers deux trous oblongs, un formé dans deux points du support côté colonne (5) et dans la paire de portions de bras (3c), et inséré à travers deux trous formés dans l'autre des deux points du support côté colonne (5) et dans la paire de portions de bras (3c);
un élément de came fixe (9) disposé entre une portion d'extrémité de l'élément de support (8) et la portion de bras (3c) adjacente à la portion d'extrémité de l'élément de support (8), l'élément de support (8) étant inséré à travers l'élément de came fixe (9), l'élément de came fixe (9) étant sensiblement empêché de tourner;
un élément de came mobile (10) disposé d'une manière tournante pour être orienté vers l'élément de came fixe (9), l'élément de support (8) étant inséré à travers l'élément de came mobile (10); et
un levier d'actionnement (11) relié à l'élément de came mobile (10), l'élément de came mobile (10) étant apte à bloquer la colonne de direction (1) en venant en prise avec l'élément de came fixe (9) en réponse à une opération de rotation du levier d'actionnement (11),
au moins l'un parmi l'élément de came fixe (9) et l'élément de came mobile (10) incluant une portion de limitation (27a) apte à limiter une rotation de l'élément de came mobile (10) lorsque la colonne de direction (1) est verrouillée, **caractérisé en ce que** la portion de limitation (27a) présente une portion induisant une rupture (33) formée pour amener la portion de limitation (27a) à rompre lorsque le levier d'actionnement (11) reçoit une force de rotation excessive.

2. Dispositif de direction selon la revendication 1, où la portion induisant une rupture (33) est définie par des portions évidées (33) formées aux deux côtés de la portion de limitation (27a) dans une direction circonférentielle de l'élément de came mobile (10).

3. Dispositif de direction selon l'une des revendications 1 et 2, où le dispositif de direction comprend en outre une portion de retenue apte à retenir la portion de limitation rompue (27a) entre l'élément de came fixe (9) et l'élément de came mobile (10) lorsque la portion de limitation (27a) se rompt.

4. Dispositif de direction selon la revendication 3, où la portion de retenue est définie par une portion de tube (10b) réalisée intégralement dans l'un de l'élément de came fixe (9) et de l'élément de came mobile (10); et la portion de tube (10b) couvre un espace pris en sandwich entre l'élément de came fixe (9) et l'élément de came mobile (10).

5. Dispositif de direction selon l'une des revendications 1 à 4, dans lequel
le support côté colonne (5) est ajusté entre les deux portions de bras (3c);
le support côté colonne (5), les deux portions de bras (3c), l'élément de came fixe (9) et l'élément de came mobile (10) sont soumis à une pression depuis les deux portions d'extrémité de l'élément de support (8);
l'élément de came mobile (10) comprend une première surface (21), et l'élément de came fixe (9) comprend une seconde surface (28) apte à coulisser en contact avec la première surface (21) au moment de l'opération rotationnelle du levier d'actionnement (11);
chacune parmi la première surface (21) de l'élément de came mobile (10) et la seconde surface (28) de l'élément de came fixe (9) comprend une portion plus élevée (27, 31) et une portion plus basse (26) relativement à une direction axiale de l'élément de came mobile (10); et
la colonne de direction (1) est apte à être verrouillée, en faisant tourner l'élément de came mobile (10) autour de l'élément de support (8) en réponse à l'opération de rotation du levier d'actionnement (11) et en modifiant ainsi une zone de contact de la seconde surface (28) avec la première surface (21) de la portion inférieure (26) à la portion supérieure (27, 31).

6. Dispositif de direction selon l'une des revendications 1 à 5, où l'élément de support (8) est inséré à travers quatre trous oblongs (6,7) formés respectivement dans deux points du support côté colonne (5) et dans les deux portions de bras (3c); et
la colonne de direction (1) est apte à se déplacer le long des formes des quatre trous oblongs (6, 7) dans deux directions parmi une direction sensiblement de haut en bas de la caisse de véhicule et une direction sensiblement avant-arrière de la caisse de véhicule pendant que la colonne de direction (1) est déverrouillée.

7. Dispositif de direction selon la revendication 5, où la portion de limitation (27a) est définie par une saillie formée dans au moins une parmi la seconde surface (28) de l'élément de came fixe (9) et la première surface (21) de l'élément de came mobile (10) pour arrêter la rotation de l'élément de came mobile (10); et
la portion (33) induisant la rupture est formée pour provoquer la rupture de la saillie (27a) lorsque le levier d'opération (11) est soumis à une force dépassant une tolérance prédéterminée.

8. Dispositif de direction selon la revendication 7, où la portion (33) induisant la rupture est définie par une portion coupée formée dans la saillie (27a) pour permettre la rotation du levier d'opération (11) lorsque le levier d'opération (11) reçoit une force dépassant la tolérance prédéterminée sous l'état verrouillé de la colonne de direction (1).
